# EUROPEAN PATENT APPLICATION

(11) **EP 2 800 023 A2**
(43) Date of publication of application: **05.11.2014**
(21) Application number: 14163598.7
(22) Date of filing: 04.04.2014
(51) Int. Cl.: G06F 21/31, G06F 21/44

(54) **Identification apparatus and method**

(30) Priority: 02.05.2013 GB 201307954
(71) Applicant: Sony Computer Entertainment Europe Ltd., London W1F 7LP (GB)
(72) Inventor: Goh, Yee Woon, London, W1F 7LP (GB)
(74) Representative: Ealey, Douglas Ralph

(57) **Abstract**

A method of multiplayer login for a single videogame console comprises the steps of, at a first videogame console associated with a first user account; reading a machine-readable unique ID code of a physical ID object comprising the unique ID code, and associating in a network the unique ID code with at least a first password of the first user account; and at a second videogame console associated with a second user account; logging the second user account onto the network using a second username and second password, reading the machine-readable unique ID code of the physical ID object, and additionally logging the first user account onto the network, submitting the unique ID code in place of at least the first password.

## Description

The present invention relates to an identification apparatus and method.

### Background

The present generation of videogame consoles have respective associated networks accessible via the internet, such the PlayStation Network ® from Sony ®, Xbox Live ® from Microsoft ® and the Nintendo ® Network.

These networks allow users of the associated consoles to access system updates and notifications, to download software patches and additional content for installed games, and also to purchase and download new content for their consoles.

In addition, the networks all provide social networking features, such as friends management, messaging tools, virtual social environments such as PlayStation Home ® and also Trophies and Achievements, which are rewards obtained for performing specific acts within games and which are visible to other users with whom a user socially interacts. Such trophies and achievements may also contribute to an overall gamer ranking of the user that is independent of any particular game.

These features are all based upon the user logging into the respective network with a unique account ID, so that their in-game and on-line activities can be properly associated with their online account.

However, there is a problem when multiplayer games are played.

Where players each log in and join a multiplayer game remotely, this still allows the respective performances of the players to be attributed to their accounts. However, some multiplayer games are played on a single console - for example split-screen racing games (such as ModNation Racers ®), or games where multiple players can act co-operatively on the same screen (such as Little Big Planet 2 ®), or games where players take turns to perform, as in quiz and dance games (such as Buzz! ® and DanceStar Party ®). In these cases, the efforts and achievements of the multiple players cannot be easily credited to their respective online personas.

This can frustrate users and also limit the on-line social aspects of a class of games for which social interaction is particularly relevant.

The present invention seeks to address or mitigate the above problems.

In a first aspect, a method of multiplayer login for a single videogame console is provided in accordance with claim 1.

In another aspect, a first videogame console system is provided in accordance with claim 5.

In another aspect, a second videogame console system is provided in accordance with claim 8.

In another aspect, a server of a network is provided in accordance with claim 12.

In another aspect, a videogame console system is provided in accordance with claim 15.

Further respective aspects and features of the invention are defined in the appended claims.

Embodiments of the present invention will now be described by way of example with reference to the accompanying drawings, in which:
- Figure 1 is a schematic diagram of a videogame console.
- Figure 2A is a schematic diagram of a videogame console system in accordance with an embodiment of the present invention.
- Figure 2B is a schematic diagram of a videogame console system in accordance with an embodiment of the present invention.
- Figure 3 is a schematic diagram of a reader device in accordance with an embodiment of the present invention.
- Figure 4 is a flow diagram of a method of multiplayer login for a single videogame console in accordance with an embodiment of the present invention.

An identification apparatus and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

### Multiplayer logins

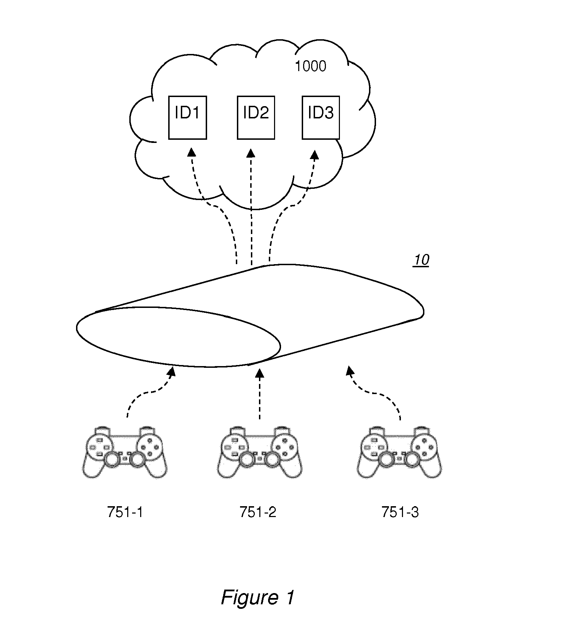

Referring now to Figure 1, in an embodiment of the present invention a console 10 (such as the Sony PlayStation 3 ® or PlayStation 4 ®) operating under suitable software instruction allows multiple users to log into their respective accounts on the network 1000 concurrently.

Typically, the owner of the console will already be logged in, for example as ID1, and may be treated as the host-user or administrator, having the full set of normal online facilities available to them (for example, the discretion to download new content, or purchase content from a game store).

Additional users may then log in (for example as ID2 and ID3), and may be treated as restricted users. For example, such users may be restricted from accessing the operating system (for example the so-called 'cross media bar' of the PS3), or may be restricted from accessing certain elements of that OS, such as account management options and the online store.

More generally, the online presence of these restricted users is limited with respect to that of the host user, but at least includes the ability for games to log trophies and/or achievements to the restricted users' own accounts.

Hence each user's respective performance in a game is evaluated for trophy and/or achievement rewards, and these are then credited to the respective user account in a similar manner to single player and remote play rewards described previously.

Access to other social elements of the gaming system may also be provided to these restricted users (as well as the host user), such as the ability to send messages to friends on a respective user's friends list, or to make use of integration provided with social media, such as automatically posting trophy updates on Facebook ®.

In this way, multiple players on a single console can still enjoy earning trophies and achievements, and optionally also use other social aspects of their account.

However, this approach raises several problems in turn.

The first problem is one of association between respective accounts and players on the console. However, correctly ascribing a controller (751-1,2,3) to a particular user account (ID1, ID2, ID3) can be dealt with relatively easily by assuming that the controller used to enter a user's account login details is the controller associated with that user during subsequent game play.

The second problem is one of password recall. Many users will forget their login details, and in particular their passwords, since most users set their own consoles to remember their login details, and indeed set the console to automatically login on start-up. Consequently if invited to join a game at a friend's home, they may not be able to recall their password, which they may not have had to actively remember for years.

The third problem is one of security. As noted above, user logins are password protected. Users will typically not want their login details to become widely known. However, whilst the host user's console may be arranged to securely wipe guest details after a login session is complete, and may not display their password as it is being entered, it is nevertheless the case that text entry using conventional console controllers is a relatively laborious task, as each letter in the text must be navigated to and selected on a virtual keyboard displayed on screen, in the absence of a real keyboard. Consequently the process of navigating around such an on-screen keyboard to enter a password would make it simple for others in the room to guess each user's password.

### ID Object

The present inventor has appreciated the above problem, and accordingly in an embodiment of the present invention each user ID is associated with a physical object that itself embodies a unique code, or ID. Such an object is referred to hereafter as an ID object.

To hold this unique ID, the ID object may comprise a radio frequency ID chip (RFID) capable of transmitting the ID to a suitable RFID reader, or may comprise a one or two dimensional bar code (e.g. a QR Code, or more generally a fiduciary marker) that encodes the ID and is printed on or affixed to the object so as to be captured by a video camera.

Hence a newly purchased console may be provided with, for example, four unique IDs to allow up to four user accounts to be associated with that console. The console will be the home device for these accounts. When opening a new user account, part of the account registration process comprises associating one of the unique IDs with the new account, by presenting the ID object to a suitable reader (described later herein) as part of the account registration process, and the unique ID being associated with that account at an administrative server.

On the home device, typically the account login details are stored permanently to allow automatic login, and so explicit login is not required (although this is still an option). However, if the owner of this new account then visits a friend, they can take their unique ID with them (as embodied in the ID object).

Now, instead of manually logging in on their friend's machine (risking at least the associated second and third problems noted previously), the guest user may instead simply present their ID object to a suitable reader (as described later herein).

The unique ID provided by the ID object is read by the console and transmitted using a suitably secure link to a server of the network, which looks up the user account that has been associated with that unique ID.

The server can then send a message back to the console authorising a network connection as if the guest user had logged in conventionally.

Alternatively, to make the login process more transparent to existing software, the server may instead securely return the corresponding login details (e.g. the username and password) to the console so that the console can provide these to a conventional login process as if typed by the user, and then login conventionally.

Advantageously therefore, the guest user does not have to recall or enter their password at all, but merely present their ID object to the console's reader.

As a security feature, optionally the guest user may still have to enter their network username, and the unique ID may only be associated with the corresponding password at the server. This means that if the ID object was lost, then someone finding it could not simply log in as that user without the additional knowledge of the original owner's username on the network.

In this case, the guest login process would involve the console sending the unique ID from the physical object to the server, where the server would then look up the corresponding password. Referring back to the two login embodiments above, if the username is also transmitted to the server, then the server can authorise the login directly, or alternatively if the username is not sent then the password is returned to the console, and the console requests login as a subsequent step.

Similarly, in any event logging in using the ID object may optionally only result in restricted user status on any console other than the home device upon which the unique ID was originally associated with the user account. As noted above such a restricted user status may limit access to account management and digital wallet facilities, amongst others.

This limits the scope for malicious use of an ID object, such as where an ID object is found and can be used to login without further information or, if the username is also required, then in a case where for example an acquaintance, knowing their guest's username, chooses to steal the ID object and attempts to access the user's account from their own console.

Optionally, when the user logs in on their home device, a summary of the usernames associated with devices where they have apparently logged in as guests can be accessed - this would reveal unauthorised accesses in the event that their ID object was abused in this way.

An additional layer of security may be provided by encoding the unique ID itself, for example using a master public key of an asymmetric public/private encoding system such as RSA®. The reader / console would read the encrypted unique ID from the ID object, and then either decrypt it locally to access the unique ID, or in a more secure embodiment, send the encrypted unique ID to the network server for decryption with the corresponding private key held centrally by the server. One decrypted, in either case the unique ID could be used as previously described.

### Object Reader

As noted above, the unique ID may be encoded in an RFID chip or as a fiduciary marker.

A fiduciary marker such as QR code is relatively easy to copy, but has the advantage that it can be read by a video camera - which all new videogame consoles are expected to be provided with.

Meanwhile RFID has the advantage that it is more secure (i.e. harder for a casual user to copy), but has the disadvantage that it requires a dedicated RFID reader to access the unique ID it holds.

In either case, the physical object embodying the RFID chip or a fiduciary marker could be any suitable object, but for the purposes of example it is assumed to be a simple token made of plastic or some other material, which the user can easily carry. The object may resemble a dog-tag, or may resemble a credit card so that it can be easily kept with the user when they travel.

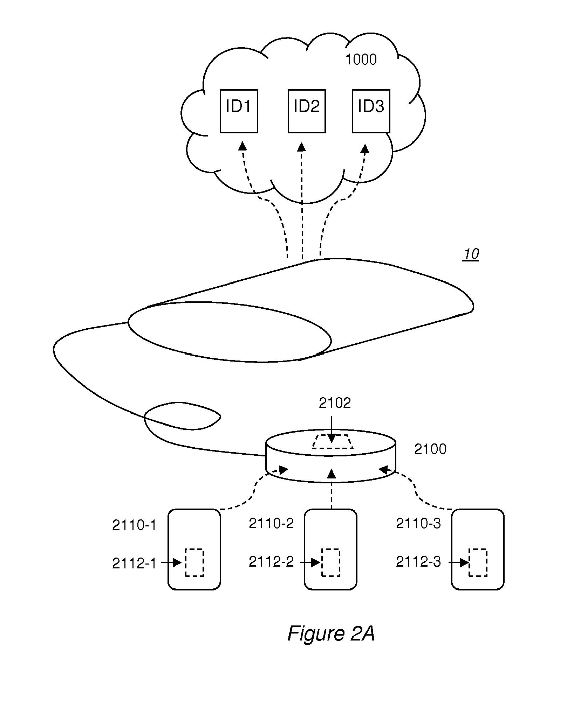

Referring to Figure 2A, in the case of an RFID chip comprising the unique ID, then the console 10 may be coupled (either wirelessly, or via a wired link such as a USB connection) to a peripheral 2100 comprising an RFID reader 2102.

Users may then present their physical objects (e.g. credit-card type tokens 2110-1,2,3 comprising respective RFID chips 2112-1,2,3) to the RFID reader 2102, thereby enabling respective logins as described above.

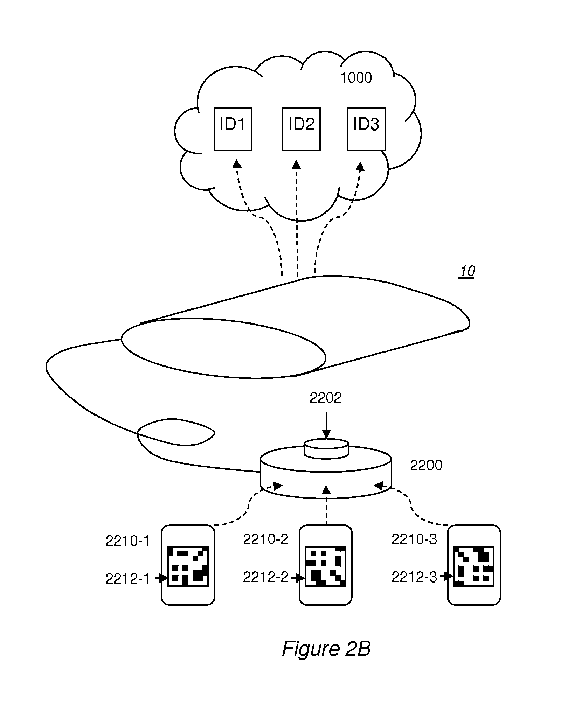

Referring to Figure 2B, in the case of a fiduciary marker comprising the unique ID, then the console 10 may be coupled (either wirelessly, or via a wired link such as a USB connection) to a peripheral 2200 comprising video camera 2202.

Users may then present their physical objects (e.g. credit-card type tokens 2210-1,2,3 comprising respective fiduciary markers 2212-1,2,3 printed on them) to the video camera, thereby enabling respective logins as described above.

In this case, as noted previously the console may be expected to be supplied with a video camera. Therefore the peripheral 2200 may simply be the existing video camera supplied with the console, and the user simply presents their fiduciary marker in front of the camera in order to log in.

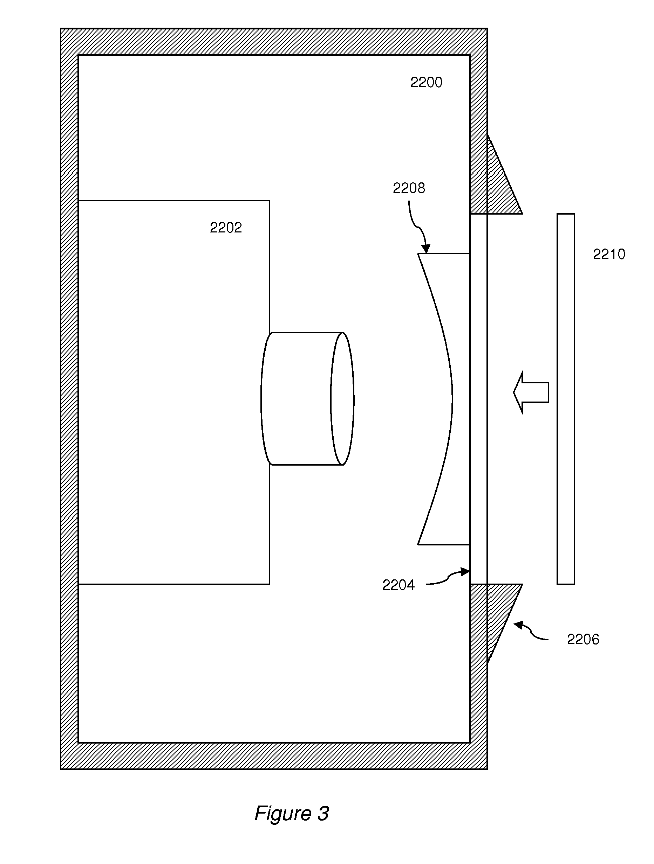

Alternatively, either the existing supplied video camera, or a video camera provided specifically for login purposes, may be mounted within a peripheral that is designed to enable reliable logins. Hence for example, the peripheral may comprise a normal Playstation Eye ® or other complete off-the shelf camera unit that may be usable interdependent of the peripheral, but which is inserted into an assembly of the peripheral. For example referring to Figure 3, the peripheral 2200 may house the video camera 2202, for example by use of appropriately shaped slots or clips, beneath a transparent surface 2204 upon which the user places their object 2210, so that the object is always a known distance from the camera and hence also a known size in the captured image, simplifying recognition by reducing the variability of the fiduciary marker in the captured image.

Optionally the transparent surface may be shaped or bounded 2206 to match the shape of the physical object, or to otherwise shaped limit the number of positions in which it can be placed upon the surface, thereby again reducing the variability of the fiduciary marker for the recognition task.

Optionally a lens arrangement 2208 of one or more lenses (such as a macro lens or magnifying lens) may be included between the transparent surface and the video camera, so that the image of the fiduciary marker is magnified and/or additionally focussed by the lens arrangement for the video camera, thereby allowing the fiduciary marker to be smaller and/or positioned closer to the camera, and/or all else being equal, occupy more of the captured image. If applicable, the transparent surface may integrally form such a lens.

Whilst the above embodiments illustrate a separate and specific reader peripheral 2100, 2200, in principle either RFID or video readers may be built into the body of the console or into a hand held controller, or similarly make use of a hand-held console with a camera (such as the Sony PS Vita ®) operating as a wirelessly connected remote camera for this purpose.

To associate a particular controller with a particular ID object when it is shown to the reader, and hence associate that controller with a particular user account for the multiplayer session, the owner of the ID object may press a particular button on their controller such as for example the PS button or X button at the same time as (or within a predetermined period before or after) showing the ID object to the reader. Alternatively or in addition, in embodiments where the user must also enter their username, then the controller used to enter the username may be assumed to be the relevant controller.

In this way, the system described herein advantageously allows participants of multiplayer games on a single console to be securely associated with their respective user accounts, and so accrue trophies and achievements, or more generally gameplay-related rewards, during such a multiplayer gaming session on a single console.

### Variant ID Objects

In the above description, the physical object was described as being a token such as a dog-tag or a credit card shaped object. However in principle any object may be used, providing it can accommodate either an RFID chip or a fiduciary marker, as applicable.

Hence for example, a user could purchase novelty ID objects from the network provider, which are then configured to comprise the unique ID associated with the user account from which the purchase is made (either by programming an RFID chip embedded in the object, or printing the appropriate fiduciary marker on it), and which are then posted to the user.

Similarly, if the user also has a portable gaming device (such as a PS Vita) which shares the same user account, or any device (such as a smartphone) that has been authenticated as belonging to the same user as the user account, then this can be used to download an app that displays the unique ID as the fiduciary marker on-screen, or (if the device has near-field communications technology) to transmit the unique ID to the RFID reader, as applicable.

Authentication of a 3^{rd} party device could be made by logging into the console network in a conventional manner (i.e. entering the username and password of the user account) using that device's browser, and then downloading the app from the server, or equivalently downloading the app from a 3^{rd} party app store and then initially logging into the server via the app in the conventional manner.

Finally, if the RFID chip was provided in isolation (or in a small module) or equivalently the fiduciary marker was printed onto a sticker, then any object may be used as the ID object, such as a 3D printed object or indeed the user's own handheld controller. In the case of printed fiduciary markers in the form of sticker, the user may similarly make multiple objects into ID objects in this manner.

### ID Objects as collectibles and in-game entities

As noted above, a user might be able to purchase a novelty ID object, for example in the form of their favourite video game characters.

However, instead of using ID objects for user account logins as described previously, a separate class of collectable objects using similar ID and reader technologies may be considered.

Notably, such collectable objects differ from the objects described previously, as the character ID of the collectable object is only unique to the type of collectable object, and need not be truly unique, as its purpose is only to identify the character represented by that type of collectable object. It is not used to identify the user or any of their account/login details.

These collectable objects could then be used as a means to access a gallery of further information or content about the character that the object represents; as such the collectable object's associated character ID would act as an access code for accessing this content.

As an enhancement or alternative to unlocking information or content about a character represented by the object, the associated character ID could unlock the character within a game.

The 2007 game *The Eye of Judgement* (http://en.wikipedia.org/wiki/The_Eye_of_Judgment) used a fiduciary marker printed on a gaming card that includes a picture of a game character. Placing this card in front of a PlayStation Eye camera when playing the game unlocked the character within the game and/or summoned them for use at that moment.

In a similar manner, any collectable object comprising a character ID and a representation of the character may be used in this way, including as a collectable model of the character itself. The character ID may be encoded as a fiduciary marker or in an RFID chip on the model.

Making the physical object a model of the character (or more generally, the virtual asset), makes the associated character ID (or more generally, the virtual asset ID) readily distinguishable by the user in the case where there are many characters to collect.

Advantageously, the reader used by the user account verification ID object as described previously herein may be re-purposed to read such collectable objects during play of a relevant game. This has the advantage that such a reader would be ubiquitous due to its role as a login system, thereby reducing initial purchase costs of the associated game, or conversely increasing the pool of potential users with the appropriate reader equipment, making such a collectibles-based game more economically feasible.

### Summary Embodiments

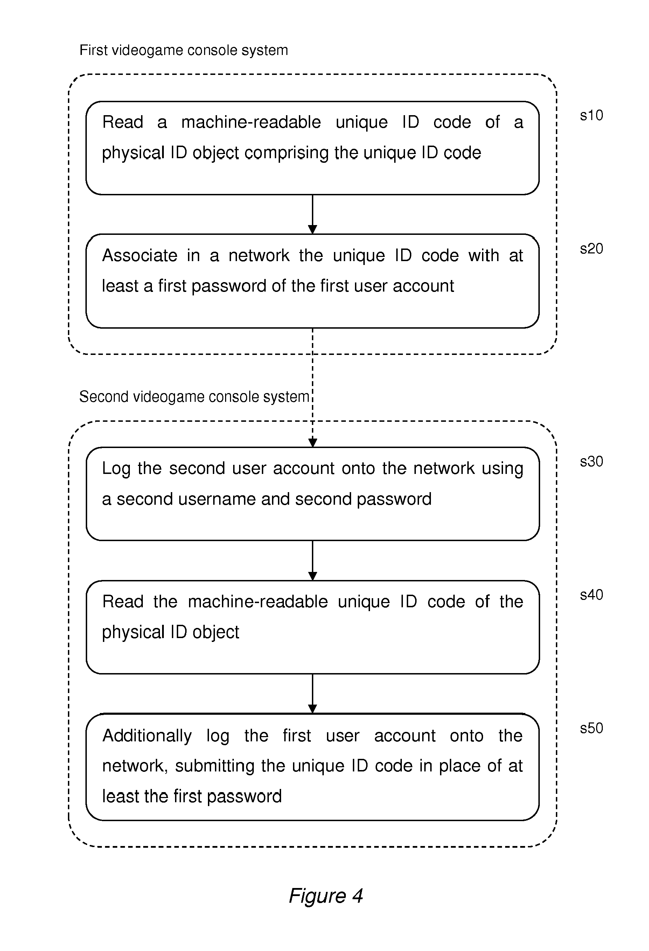

Referring now to Figure 4, in a summary embodiment of the present invention, a method of multiplayer login for a single videogame console comprises:
at a first videogame console associated with a first user account,
In a first step s10, reading a machine-readable unique ID code of a physical ID object comprising the unique ID code; and
In a second step s20, associating in a network the unique ID code with at least a first password of the first user account; and
at a second videogame console associated with a second user account,
In a third step s30, logging the second user account onto the network using a second username and second password;
In a fourth step s40, reading the machine-readable unique ID code of the physical ID object; and
In a fifth step s50, additionally logging the first user account onto the network, submitting the unique ID code in place of at least the first password, as described previously herein.

In an instance of this summary embodiment, during subsequent gameplay the method comprises the steps of detecting respective user activities associated with rewards, and upon their detection crediting the or each reward to the respective user account, as described previously herein.

In an instance of this summary embodiment, the additionally logged in first user account has restricted access to at least some functions of the second videogame console, as described previously herein.

In a summary embodiment of the present invention, a first videogame console system comprises a first videogame console (10) comprising a network connection operable to connect to a network (1000), and a reader device (2100, 2200) operable to read data, the data comprising a unique ID code and embodied in a physical ID object (2210) read by the reader device, and wherein the first videogame console is operable to log a first user account (ID1, 2, 3) onto the network, and operable to transmit the unique ID code to the network for association with at least the password of the first user account, as described previously herein.

In a summary embodiment of the present invention, a second videogame console system comprises a second videogame console (10) comprising a network connection operable to connect to a network (1000); and a reader device (2100, 2200) operable to read data, the data comprising a unique ID code and embodied in a physical ID object (2210) read by the reader device, and wherein the second videogame console is operable to log a second user account onto the network (ID1,2,3), and operable to additionally submit for concurrent login details for a first user account (ID1,2,3) to the network that comprises the unique ID code in place of at least a password of the first user account, as described herein.

It will be appreciated that, since the user of the first videogame console system may visit the user of the second videogame console system and vice-versa, in practice a single videogame console system may embody the first and second single videogame console systems of the above summary embodiments.

Consequently, for either of these summary embodiments, in one instance the unique ID code is embodied in a physical ID object as a fiduciary marker that is one selected from the list consisting of:
i. a fiduciary marker printed on the physical ID object;
ii. a fiduciary marker affixed to the physical ID object; and
iii. a fiduciary marker displayed on a display of the physical ID object, as described herein, and the reader is a video camera mounted in an assembly comprising a window additional to the video camera through which the video camera views the physical ID object.

However, in an alternative instance, the unique ID code is embodied in a physical ID object as an RFID chip contained by or affixed to the physical ID object, and the reader is an RFID reader.

In an instance of the summary embodiment of the second videogame console system, the second videogame console comprises processor means (e.g. the Cell processor of the PS3) operable to restrict access by the user of the first user account to one or more features of the operating system of the second videogame console, as described previously.

In a summary embodiment of the present invention, a server of a network (1000) (such as the PlayStation Network) comprises a network connection operable to connect to a first and a second videogame console (for example via the internet), and a look-up table operable to associate unique IDs with at least corresponding passwords of user accounts. Passwords may be encrypted in this table for additional security. The server is operable to receive from a first videogame console login details comprising at least a password for a first user account and a unique ID, and operable to associate the unique ID with at least the password of the first user account. The server is also operable to receive from a second videogame console login details for a first user account comprising at least the unique ID, and to log the first user account onto a network by reference to the password associated with the unique ID in the look-up table. As noted previously, this may be done directly by the server (i.e. once the unique ID is checked against user account details, then the server will log that account onto the network) or may be done via the second console by securely returning at least the password to the console so that this can be used transparently by the console to additionally log the first user in.

In an instance of this summary embodiment, the look-up table is operable to associate unique IDs with at least corresponding passwords and usernames of user accounts, as described previously, thereby saving the first user from having to enter their user-name on the second console as part of the log-in process.

In an instance of this summary embodiment, the server restricts access for the first user account to one or more online facilities on the network after logging the first user account onto the network. These facilities may include an internet portal, an online shop, a digital wallet or centrally run user administration tools.

Turning now to the collectable objects, in a summary embodiment of the present invention a videogame console system comprises a videogame console operable to run an videogame comprising at least a first virtual asset set by default to be inaccessible by a player of the videogame, and a reader device operable to read data, the data comprising an asset ID code and embodied in a physical object read by the reader device and wherein the videogame console is operable to provide in-game user access to the first virtual asset responsive to receiving an asset ID code previously associated with the first virtual asset, and the asset ID code is made visually distinguishable by the user from other asset ID codes by virtue of its respective physical object being a model of the respective first virtual asset associated with that asset ID code, as described previously.

In an instance of this summary embodiment, the physical object embodies the asset ID code as one selected from the list consisting of:
i. a fiduciary marker printed on the physical object;
ii. a fiduciary marker affixed to the physical object;
iii. a fiduciary marker displayed on a display of the physical object; and
iv. an RFID chip of the physical object.

Finally it will be appreciated that the Cell processor of a PS3, or the processor of any suitable console or other general purpose computer, may implement the above described methods and techniques as applicable when operating under suitable software instruction.

Hence it will be appreciated that the methods disclosed herein may be carried out on conventional hardware suitably adapted as applicable by software instruction or by the inclusion or substitution of dedicated hardware.

Thus the required adaptation to existing parts of a conventional equivalent device may be implemented in the form of a non-transitory computer program product or similar object of manufacture comprising processor implementable instructions stored on a data carrier such as a floppy disk, optical disk, hard disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, if applicable the computer program may take the form of a transmission via data signals on a network such as an Ethernet, a wireless network, the Internet, or any combination of these or other networks.

## Claims

1. A method of multiplayer login for a single videogame console, comprising the steps of:
at a first videogame console associated with a first user account,
reading a machine-readable unique ID code of a physical ID object comprising the unique ID code; and
associating in a network the unique ID code with at least a first password of the first user account; and
at a second videogame console associated with a second user account,
logging the second user account onto the network using a second username and second password;
reading the machine-readable unique ID code of the physical ID object; and
additionally logging the first user account onto the network, submitting the unique ID code in place of at least the first password.

2. The method according to claim 1, comprising during subsequent gameplay the steps of:
detecting respective user activities associated with rewards; and
upon detection crediting the or each reward to the respective user account.

3. The method according to claim 1 or claim 2, in which the additionally logged in first user account has restricted access to at least some functions of the second videogame console.

4. A computer program for implementing the steps of any preceding method claim.

5. A first videogame console system comprising:
a first videogame console comprising a network connection operable to connect to a network; and
a reader device operable to read data, the data comprising a unique ID code and embodied in a physical ID object read by the reader device; and wherein
the first videogame console is operable to log a first user account onto the network, and operable to transmit the unique ID code to the network for association with at least the password of the first user account.

6. The first videogame console system according to claim 5, in which the unique ID code is embodied in a physical ID object as a fiduciary marker that is one selected from the list consisting of:
i. a fiduciary marker printed on the physical ID object;
ii. a fiduciary marker affixed to the physical ID object; and
iii. a fiduciary marker displayed on a display of the physical ID object.

7. The first videogame console system according to claim 5, in which the unique ID code is embodied in a physical ID object as an RFID chip contained by or affixed to the physical ID object.

8. A second videogame console system comprising:
a second videogame console comprising a network connection operable to connect to a network; and
a reader device operable to read data, the data comprising a unique ID code and embodied in a physical ID object read by the reader device; and wherein
the second videogame console is operable to log a second user account onto the network, and operable to additionally submit for concurrent login details for a first user account to the network that comprises the unique ID code in place of at least a password of the first user account.

9. The second videogame console system according to claim 8, in which the unique ID code is embodied in a physical ID object as a fiduciary marker that is one selected from the list consisting of:
i. a fiduciary marker printed on the physical ID object;
ii. a fiduciary marker affixed to the physical ID object; and
iii. a fiduciary marker displayed on a display of the physical ID object.

10. The second videogame console system according to claim 9, in which the reader is a video camera mounted in an assembly comprising a window additional to the video camera through which the video camera views the physical ID object.

11. The second videogame console system according to any one of claims 8 to 10, in which the second videogame console comprises:
processor means operable to restrict access by the user of the first user account to one or more features of the operating system of the second videogame console.

12. A server of a network, comprising:
a network connection operable to connect to a first and a second videogame console; and
a look-up table operable to associate unique IDs with at least corresponding passwords of user accounts;
the server operable to receive from a first videogame console login details comprising a password for a first user account and a unique ID, and operable to associate the unique ID with at least the password of the first user account;
the server operable to receive from a second videogame console login details for a first user account comprising at least the unique ID, and to log the first user account onto a network by reference to the password associated with the unique ID I the look-up table.

13. The server according to claim 12, in which the look-up table is operable to associate unique IDs with at least corresponding passwords and usernames of user accounts.

14. The server according to claim 12 or claim 13, in which the server restricts access for the first user account to one or more online facilities on the network after logging the first user account onto the network.
